# EUROPEAN PATENT APPLICATION

(11) **EP 4 742 480 A1**
(43) Date of publication of application: **13.05.2026**
(21) Application number: 24212276.0
(22) Date of filing: 12.11.2024
(51) Int. Cl.: H02J 3/14, H02J 13/00, G05B 13/02, G06Q 50/06

(54) **SYSTEM AND METHOD FOR MANAGING ELECTRICAL DEVICES AS PART OF ELECTRIC NETWORK**

(71) Applicant: Riot Innovations Oy, 02200 Espoo (FI)
(72) Inventor: Karvinen, Miska, 02200 Espoo (FI)
(74) Representative: Papula Oy

(57) **Abstract**

A system and a method for energy management are provided. The method comprises detecting device types based on sensor data received from the devices, the sensor data comprising information about power usage of said devices. Suitability of the detected devices for various energy management operations is determined based on the detected device types, one or more criteria and received energy management signals from external devices. Thereafter, energy consumption of the devices is controlled by a control device based on suitability of the devices for the respective energy management operation.

## Description

### TECHNICAL FIELD

Various example embodiments generally relate to the field of energy management. Some example embodiments relate to detection and management of electrical devices, such as household appliances and other electrical devices located in buildings, as part of flexible electric network participating in grid balancing operations.

### BACKGROUND

Multiple factors, such as an amount of renewable energy sources connected to the grid, targets for reducing carbon dioxide emissions, and large fluctuations in the price of electricity increase a demand for new ways to manage electricity consumption and demand.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments of the present disclosure enable the detection of different types of devices applicable for energy management, and management of said devices to participate in grid balancing and other energy management operations. This and other benefits may be achieved by the features of the independent claims. Further example embodiments are provided in the dependent claims, the description, and the drawings.

According to a first aspect, an energy management system is disclosed. The energy management system may comprise: at least one processor; and at least one memory comprising instructions which, when executed by the at least one processor, cause the energy management system at least to: receive, from sensors configured to monitor a plurality of electrical devices, data comprising at least current and voltage values of the plurality of electrical devices; store the received data for analysis of device types of the plurality of electrical devices; analyse the stored data of each of the plurality of electrical devices using harmonic analysis and statistical analysis to obtain indications of the device type and an energy consumption profile of the respective electrical device; determine, by comparing the indications of the device type and the energy consumption profile to reference data, the device type of the electrical device; add the electrical device to one or more control groups based on the determined device type, the energy consumption profile and one or more criteria; receive, from one or more external sources, signals associated with electric grid balancing; determine, based on the received signals, control instructions for one or more of the control groups to at least one of increase or decrease energy usage; and transmit the determined control instructions to control devices of the plurality of electrical devices based the one or more control groups in which the respective electrical device belongs to.

According to an example embodiment of the first aspect, the energy management system is caused to: calculate, based on the received data, at least one of energy usage, harmonic distortion or usage times of the electrical device with respect to time; obtain the indications of the device type based on the calculated data, wherein the indications comprise at least one of an indication of a continuous load type, an indication of a cyclic load type, harmonic characteristics, usage times or a ratio of harmonic components of the electrical device; calculate probabilities of the device type based on the indications of the device type, the energy consumption profile and the reference data; determine the device type based on the probability being above a certain threshold; and at least one of repeat the analysis after a certain period when new data is received from the sensors or transmit the data to a cloud server device for further analysis performed using one or more machine learning models configured for identification of device types when it is determined that the calculated probabilities are below the certain threshold.

According to an example embodiment of the first aspect, the control instructions cause the electrical devices included in the control group to apply one of a normal operation mode of the electrical device, to apply an energy saving operation mode, to increase energy usage based on available renewable energy, or to participate in the electric grid balancing by decreasing energy usage for a certain time period based on the instructions received from the energy management system.

According to an example embodiment of the first aspect, at least one of the control groups is configured to provide reserve capacity for the electric grid and the signals associated with electric grid balancing comprise a signal indicative of a need to activate the reserve capacity for balancing the electric grid; and wherein the control instructions transmitted to the at least one control group configured to provide reserve capacity comprise instructions to reduce energy consumption in response to the received signal indicative of the need to activate the reserve capacity.

According to an example embodiment of the first aspect, the energy management system is further caused to: verify, based on the data received after the transmitted control instructions, that the energy usage of the electrical devices has increased or decreased according to the transmitted control instructions; and adjust at least one of the control groups or the control instructions based on results of the verification.

According to an example embodiment of the first aspect, the energy management system is caused to determine, based on the data received from the electrical device, at least one of: harmonic distortion of the electrical device; a power factor and phase angle between the current and the voltage; load impedance at different frequencies; and determine the device type of the respective electrical device based on the power factor, the phase angle and the load impedance.

According to an example embodiment of the first aspect, the energy management system is caused to: determine that the device type corresponds to resistive load when at least one of the power factor is approximately one, the phase angle between the current and the voltage is approximately zero, the amount of harmonic distortion is below a first threshold, or impedance is approximately constant; determine that the device type corresponds to inductive load when at least one of the power factor is less than one, the phase angle between the current and the voltage is positive, the amount of harmonic distortion is above the first threshold, or the impedance increases with respect to frequency; and determine that the device type corresponds to capacitive load when at least one of the power factor is less than zero, the phase angle between the current and the voltage is negative, the amount of harmonic distortion is above the first threshold, or the impedance decreases with respect to frequency.

According to an example embodiment of the first aspect, the energy management system is further configured to: after the device type is determined, monitor the received data to detect changes in behaviour of the respective electrical device; detect that the changes in behaviour of the electrical device are indicative of at least one of a malfunction of the electrical device or changed device type; and remove the electrical device from the one or more control groups based on the detected malfunction or change the control group of the electrical device based on the detected change of a device type.

According to an example embodiment of the first aspect, the one or more criteria comprise at least one of:
- a current operation mode of the electrical device;
- priority set by a user for balancing the electric grid, reducing energy usage of a property of the user or increasing usage of renewable energy sources;
- the signal associated with electric grid balancing being below one or more set thresholds;
- the signal associated with electric grid balancing being above the one or more set thresholds;
- predictions about the electric grid balance indicating a need to increase or decrease energy usage;
- criticality of operation of the electrical device;
- data received from sensors indicative of a presence of user in the property;
- operating environment of the electrical device;
- operational limitations of the device type;
- response time of the device type to load changes;
- capacity of the electrical device for energy consumption adjustments; or
- a share of renewable energy available for use by the electrical devices.

According to an example embodiment of the first aspect, the energy management system is caused to: determine weighting factors for the one or more criteria with respect to each of the control groups; calculate points for each control group based on the determined weighting factors; and determine the control instructions based on the control group having the highest points..

According to an example embodiment of the first aspect, the control group of the electrical device is changed dynamically based on updated information associated with the one or more criteria or the signals associated with the electric grid balancing.

According to an example embodiment of the first aspect, the energy management system comprises: one or more edge processing devices configured to perform the data monitoring, data analysis using the harmonic analysis and statistical analysis and transmission of control instructions; and a cloud server device communicatively coupled with the one or more edge processing devices and configured to provide for the one or more edge processing devices at least one of predictions of electric grid balance, a communication link for the signals associated with electric grid balancing, or device type analysis using one or more machine learning models.

According to an example embodiment of the first aspect, the data monitoring, data analysis using the harmonic analysis and statistical analysis, and control operations are performed by different edge processing devices, the different edge processing devices being wirelessly communicatively coupled with each other and forming a modular structure.

According to an example embodiment of the first aspect, the energy management system is further caused to: determine that the device type cannot be determined by the edge processing device based on the received data using the harmonic analysis and statistical analysis; and at least one of perform, by the edge processing device, the device type analysis again after a predetermined interval based on new data received for the respective electrical device or transmit the data to the cloud server device to be analyzed using the one or more machine learning models.

According to a second aspect, a method is disclosed. The method may comprise: receiving, from sensors configured to monitor a plurality of electrical devices, data comprising at least current and voltage values of the plurality of electrical devices; storing the received data for analysis of device types of the plurality of electrical devices; analysing the stored data of each of the plurality of electrical devices using harmonic analysis and statistical analysis to obtain indications of the device type and an energy consumption profile of the respective electrical device; determining, by comparing the indications of the device type and the energy consumption profile to reference data, the device type of the electrical device; adding the electrical device to one or more control groups based on the determined device type, the energy consumption profile and one or more criteria; receiving, from one or more external sources, signals associated with electric grid balancing; determining, based on the received signals, control instructions for one or more of the control groups to at least one of increase or decrease energy usage; and transmitting the determined control instructions to control devices of the plurality of electrical devices based the one or more control groups in which the respective electrical device belongs to.

According to an example embodiment of the second aspect, the method comprises: calculating, based on the received data, at least one of energy usage, harmonic distortion or usage times of the electrical device with respect to time; obtaining the indications of the device type based on the calculated data, wherein the indications comprise at least one of an indication of a continuous load type, an indication of a cyclic load type, harmonic characteristics, usage times or a ratio of harmonic components of the electrical device; calculating probabilities of the device type based on the indications of the device type, the energy consumption profile and the reference data; determining the device type based on the probability being above a certain threshold; and at least one of repeating the analysis after a certain period when new data is received from the sensors or transmitting the data to a cloud server device for further analysis performed using one or more machine learning models configured for identification of device types when it is determined that the calculated probabilities are below the certain threshold.

According to an example embodiment of the second aspect, the control instructions cause the electrical devices included in the control group to apply one of a normal operation mode of the electrical device, to apply an energy saving operation mode, to increase energy usage based on available renewable energy, or to participate in the electric grid balancing by decreasing energy usage for a certain time period based on the instructions received from the energy management system.

According to an example embodiment of the second aspect, at least one of the control groups is configured to provide reserve capacity for the electric grid and the signals associated with electric grid balancing comprise a signal indicative of a need to activate the reserve capacity for balancing the electric grid; and wherein the control instructions transmitted to the at least one control group configured to provide reserve capacity comprise instructions to reduce energy consumption in response to the received signal indicative of the need to activate the reserve capacity.

According to an example embodiment of the second aspect, the method comprises: verifying, based on the data received after the transmitted control instructions, that the energy usage of the electrical devices has increased or decreased according to the transmitted control instructions; and adjusting at least one of the control groups or the control instructions based on results of the verification.

According to an example embodiment of the second aspect, the method comprises determining, based on the data received from the electrical device, at least one of: harmonic distortion of the electrical device; a power factor and phase angle between the current and the voltage; load impedance at different frequencies; and determining the device type of the respective electrical device based on the power factor, the phase angle and the load impedance.

According to an example embodiment of the second aspect, the method comprises: determining that the device type corresponds to resistive load when at least one of the power factor is approximately one, the phase angle between the current and the voltage is approximately zero, the amount of harmonic distortion is below a second threshold, or impedance is approximately constant; determining that the device type corresponds to inductive load when at least one of the power factor is less than one, the phase angle between the current and the voltage is positive, the amount of harmonic distortion is above the second threshold, or the impedance increases with respect to frequency; and determining that the device type corresponds to capacitive load when at least one of the power factor is less than zero, the phase angle between the current and the voltage is negative, the amount of harmonic distortion is above the second threshold, or the impedance decreases with respect to frequency.

According to an example embodiment of the second aspect, the method comprises: after the device type is determined, monitoring the received data to detect changes in behaviour of the respective electrical device; detecting that the changes in behaviour of the electrical device are indicative of at least one of a malfunction of the electrical device or changed device type; and removing the electrical device from the one or more control groups based on the detected malfunction or change the control group of the electrical device based on the detected change of a device type.

According to an example embodiment of the second aspect, the one or more criteria comprise at least one of:
- a current operation mode of the electrical device;
- priority set by a user for balancing the electric grid, reducing energy usage of a property of the user or increasing usage of renewable energy sources;
- the signal associated with electric grid balancing being below one or more set thresholds;
- the signal associated with electric grid balancing being above the one or more set thresholds;
- predictions about the electric grid balance indicating a need to increase or decrease energy usage;
- criticality of operation of the electrical device;
- data received from sensors indicative of a presence of user in the property;
- operating environment of the electrical device;
- operational limitations of the device type;
- response time of the device type to load changes;
- capacity of the electrical device for energy consumption adjustments; or
- a share of renewable energy available for use by the electrical devices.

According to an example embodiment of the second aspect, the method comprises: determining weighting factors for the one or more criteria with respect to each of the control groups; calculating points for each control group based on the determined weighting factors; and determining the control instructions based on the control group having the highest points.

According to an example embodiment of the second aspect, the control group of the electrical device is changed dynamically based on updated information associated with the one or more criteria or the signals associated with the electric grid balancing.

According to an example embodiment of the second aspect, the method comprises: performing, by one or more edge processing devices, the data monitoring, data analysis using the harmonic analysis and statistical analysis and transmission of control instructions; and providing, by a cloud server device communicatively coupled with the one or more edge processing devices for the one or more edge processing devices, at least one of predictions of electric grid balance, a communication link for the signals associated with electric grid balancing, or device type analysis using one or more machine learning models.

According to an example embodiment of the second aspect, the data monitoring, data analysis using the harmonic analysis and statistical analysis, and control operations are performed by different edge processing devices, the different edge processing devices being communicatively coupled with each other and forming a modular structure.

According to an example embodiment of the second aspect, the method further comprises determining that the device type cannot be determined by the edge processing device based on the received data using the harmonic analysis and statistical analysis; and at least one of performing, by the edge processing device, the device type analysis again after a predetermined interval based on new data received for the respective electrical device or transmit the data to the cloud server device to be analyzed using the one or more machine learning models.

According to a third aspect, an apparatus is disclosed. The apparatus may comprise means for performing the method according to the second aspect, or any example embodiment(s) thereof, as provided in the description and/or the claims.

According to a fourth aspect, a computer program, a computer program product, or a (non-transitory) computer-readable medium is disclosed. The computer program, computer program product, or (non-transitory) computer-readable medium may comprise instructions, which when executed by an apparatus, cause the apparatus at least to perform the method according to the second aspect, or any example embodiment(s) thereof, as provided in the description and/or the claims.

Example embodiments of the present disclosure can thus provide apparatuses, methods, computer programs, computer program products, or computer readable media for improving various aspects of optimizing operation of electrical devices. Any example embodiment may be combined with one or more other example embodiments. These and other aspects of the present disclosure will be apparent from the example embodiment(s) described below. According to some aspects, there is provided the subject matter of the independent claims. Some further aspects are defined in the dependent claims.

### DESCRIPTION OF THE DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of an energy management system according to an example embodiment;
FIG. 2 illustrates an example of an apparatus configured to practice one or more example embodiments;
FIG. 3 illustrates an example of an energy management procedure; and
FIG. 4 illustrate an example of a method for energy management.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

A virtual power plant may refer to an energy management system that integrates distributed generation and/or consumption of electrical energy. A virtual power plant may enable the use of a property's energy resources, for example, for demand response and other energy management operations. Demand response may be a service provided by the grid company to improve the balance between electricity production and consumption on the grid in different situations. Demand response may be also performed by individuals, for example, based on electricity prices by shifting consumption from expensive hours to cheaper hours. In the future, there will be a need for more precise power balance management as fossil-fuelled balancing power and generation may be phased out and increasingly replaced by weather-dependent generation. At the same time, the large electrical machines that keep the grid inert may be removed, making the grid more sensitive to frequency fluctuations.

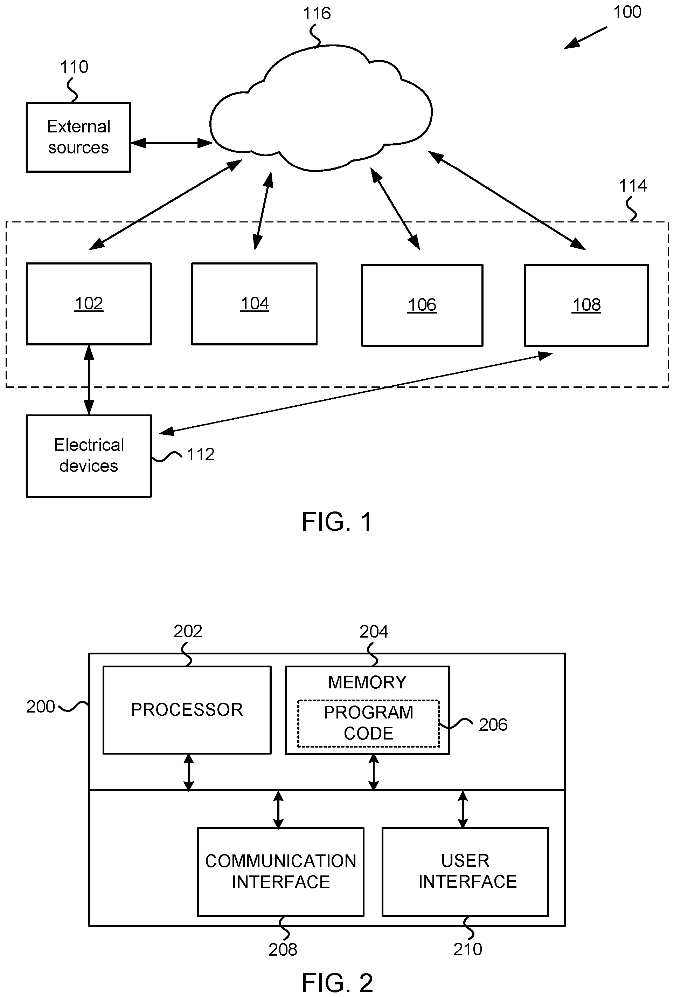

FIG. 1 illustrates an example of an energy management system 100 according to an example embodiment. The system 100 may comprise one or more computing devices configured to implement various energy management operations by monitoring and controlling a plurality of electrical devices 112. In one example, the system 100 may comprise a plurality of modules configured to perform dedicated tasks, as well as to co-operate with each other for implementation of the energy management operations. Alternatively, a single computing device may be configured to perform the tasks instead of having the tasks distributed to the plurality of separate modules. The computing device may be, for example, an edge processing device 114 communicatively coupled to a cloud server 116. Although FIG. 1 shows one edge processing device 114, the system 100 may comprise multiple edge processing devices 114.

In one example, the system 100 may comprise a data collection module 102. The data collection module 102 may be configured to gather data from a plurality of electrical devices in real time. The plurality of electrical devices may comprise different types of devices associated with different types of buildings, such as households, office buildings, commercial buildings, and the like. In one example, the data may be received by the data collection module 102 from control devices coupled with the electrical devices. For example, the control device may be coupled to a wiring or a socket feeding power to a respective electrical device or electrical devices.

The control device may comprise means for monitoring electricity consumption of the respective electrical device(s) and means for turning on/off power feed to the electrical device(s). The data received by the data collection module 102 may comprise one or more parameters related to the monitored electricity consumption, such as a current, a voltage, power, frequency, harmonic distortion signals, operational modes, usage times of the electrical device(s), and the like. The operational modes may indicate whether the electrical device is on, off, or in a stand-by mode. In one example, the operational modes may be determined by the system 100 based on the monitored current, voltage and/or power usage values.

Alternatively, or in addition, the data may be received from one or more sensors coupled with the electrical devices being monitored. The sensors may be configured to measure at least current and voltage used by the electrical device. In addition, the electrical devices, or power input of the electrical devices, may be equipped with means for turning on/off power feed to the electrical device. Means for turning on and off power feed may comprise, for example, a power switch, a relay, or the like. In one example, the sensor data may be also received from motion detection sensors in vicinity of the electrical devices 112. The data provided by the motion detection sensors may be used, for example, to anticipate current or future usage of the electrical devices 112. For example, when it is detected based on the motion sensor data that there is somebody in the same room with the electrical device (e.g., lighting equipment), the information may be used in making control decisions such that the lighting equipment will be kept on.

The system 100 may further comprise a data analysis module 104 configured to analyse the data stored by the data collection module 102. The data analysis module 104 may be configured to detect one or more indications of a load type of the respective electrical device. Based on the one or more indications, the data analysis module 104 may be configured to determine the load type of the electrical device. For example, the load type of the electrical device can correspond to a resistive load, a capacitive load or inductive load. Resistive loads in buildings comprise typically lighting equipment and heaters, among others. Inductive loads in buildings comprise typically motors and transformers, among others. Capacitive loads in buildings comprise typically capacitor banks and electronic devices, among others.

In one example, an indication of the load type may be based on a power factor of the electrical device. The power factor may be calculated by the data analysis module 104 based on data collected by the data collection module 102. For example, when the power factor is approximately 1, this may indicate that the load type is resistive load as the current and voltage are in the same phase. When the power factor is less than 1, the data analysis module can determine that the load type is inductive load when the current lags voltage and that the load type is capacitive load when the current leads the voltage.

In one example, an indication of the load type may be based on a phase angle. The phase angle may be determined by the data analysis module 104 based on the data collected by the data collection module 102. For example, when the phase angle is 0, this may indicate that the load type is resistive load as the current and voltage are in the same phase. When the phase angle is positive, this may indicate that the current lags voltage and the load type is inductive load. When the phase angle is negative this may indicate that the current leads the voltage and the load type is capacitive load.

In one example, an indication of the load type may be based on the harmonic distortion. The harmonic distortion may be calculated by the data analysis module 104 based on data collected by the data collection module 102. For example, when it is detected by the data analysis module that harmonic distortion is not above a certain threshold value, it may indicate that the load type is resistive load. If it is detected by the data analysis module 104 that harmonic distortion is caused above a certain threshold value, it may indicate that the load type is inductive load. In one example, inductive load causing harmonic distortion can comprise large motors and machines. If it is detected by the data analysis module 104 that harmonic distortion is above a certain threshold value, it may indicate that the load type is capacitive load. In one example, capacitive load causing harmonic distortion can comprise electronics and fluorescent lamps.

In one example, an indication of the load type may be based on a response to load changes. The response to load changes may be calculated by the data analysis module 104 based on data collected by the data collection module 102. For example, when the response to load change is substantially immediate it may be indicative that the load type is resistive. When the response time to load change is over a certain threshold value, it may indicate that the load type is inductive. When the response time to load change is under a certain threshold value and the voltage spikes when connecting or disconnecting to the load it may indicate that the load type is capacitive load.

In one example, an indication of the load type may be based on an impedance. The impedance may be calculated by the data analysis module 104 based on data collected by the data collection module 102. For example, when the impedance is constant and approximately equal to the resistance it may indicate that the load is resistive. When the impedance increases with the frequency it may indicate that the load type is inductive load. When the impedance decreases while the frequency increases it may indicate that the load type is capacitive load.

In one example, the data analysis module 104 may be configured to analyse signal shapes, e.g. waveforms, of the measured current and voltage. The data analysis module 104 may use for example fast Fourier transformation (FFT) to analyse harmonic components of the signals. In addition, the data analysis module 104 may perform at least one of time series analysis or statistical analysis, for example, to determine typical usage times of the individual electrical devices. The indications of load types and/or information about typical usage times can be used by the data analysis module 104 to determine a device type of the respective electrical device. The device type may correspond to the load type or to a more specific device type, such as lighting, motor, household appliance, air conditioning, etc. The device type may be determined by comparing the analysed data to reference data of the different device types to find a closest match.

If the data analysis module 104 is unable to determine the device type of the electrical device, the data analysis module 104 may determine to transmit the data associated with the electrical device to a cloud-based analysis device, wherein e.g. a convolutional neural network, CNN, is trained for device type analysis. The cloud-based analysis device may transmit to the data analysis module 104 the result of its analysis. The data analysis module 104 can then determine the device type of the electrical device based on the result received from the cloud-based analysis device, and further use the result for training its own algorithms (e.g., update the reference data).

In addition to the device type, the data analysis module 104 can be configured to determine energy consumption of the electrical device. The determined energy consumption information may comprise an amount of consumed energy with respect to time, e.g. hourly consumption per day, per day of a week, etc., indicative of an energy consumption of the device based on use habits of a user and/or general operation times of the electrical device. The energy consumption information with respect to time may be referred to as a use profile or energy consumption profile of the electrical device. The energy consumption information may further comprise total energy consumption of the electrical device, as well as the distribution of power consumption between different electrical devices.

The data analysis module 104 may be configured to group the analysed electrical devices based on predefined categories. The groups may be referred to as device groups. Alternatively, the data analysis module 104 can be configured to group the electrical devices based on similarity of the electrical devices. The similarity may be estimated based on at least one of the load type, the device type, electricity consumption information, or times of usage of the electrical devices. In general, each device group may comprise electrical devices with one or more same characteristics.

For example, the data analysis module 104 may determine that an electrical device is a water heater with a probability of 80 % and that the electrical device is an electric sauna stove with a probability of 15 %. The data analysis module 104 can then check that the probability for the electrical device being a water heater is above a certain threshold, e.g., > 75 %, and can then add the electrical device to a group of water heaters. The probabilities can be calculated, for example, based on typical energy consumption data of electrical device types of that group. For example, in case of the above example, water heaters usually use relatively large amount of energy during the night compared to daytime, and electric sauna stoves usually consume most energy for a few hours during weekend evenings. One electrical device may belong to more than one device group. Further, electrical devices can be removed from device groups and added to other device groups based on a current situation. For example, the water heater could belong to groups of resistive loads, heaters and water heaters. In addition to device type based grouping, or alternatively, the grouping of the devices may be performed based on energy management operations for which the electrical devices are suitable for. If the data analysis module 104 later detects that the electrical device that was earlier classified as a water heater no longer matches the characteristics of water heaters (e.g., the house is renovated and another electrical device is now coupled with the monitored power feed that previously fed power to the water heater), the data analysis module 104 can remove the electrical device from the group of water heater, identify the new electrical device, and add it to one or more device groups it accordingly.

However, if the data analysis module 104 was unable to identify the electrical device or the load type of the electrical device, the electrical device may not be added to any device group. Instead, the data analysis module 104 may be configured to try to identify the load type and/or device type of the electrical device again later, such as the next day, after the data collection module 102 has gathered more data for the analysis.

The data analysis module 104 may be further configured to recognize different user profiles or energy consumption profiles. For example, the data analysis module 104 may analyse when the monitored electrical devices are in use and how much energy is being consumed by the electrical devices at different points in time. Further, recognition of times/periods of peak energy consumption may be used to plan energy management strategies to cut the peaks of energy consumption.

Anticipatory maintenance may also be implemented by the data analysis module 104 based on the measurements performed by the data collection module 102. Anticipatory maintenance may refer to predictive maintenance, wherein the data analysis module is configured to detect oncoming failures of the monitored electrical devices. For example, measurements of a monitored electrical device from the data collection module 102 may be compared to historical data of the respective electrical device, or similar electrical devices, to detect an indication of abnormal behaviour of the electrical device. The detected abnormal behaviour may indicate a need for maintenance before a failure has occurred. Based on measurements obtained from inductive loads, the data analysis module 104 may also be configured to perform analysis of vibration and noise which may indicate mechanical problems. The data analysis module 104 may be further configured to monitor power quality based on the data from the data collection module 102. The measurements may be analysed to detect fluctuations in voltage and other indications of power quality problems. Analysis of harmonic distortion may also reveal problems in power quality which may affect the performance and lifetime of the electrical device. Based on the detected maintenance need, the data analysis module 104 may determine that the electrical device is not suitable to participate in the energy management operations. The data analysis module 104 may further cause transmission of a notification to an owner of the electrical device about the need for maintenance. When the data analysis module 104 detects based on later received measurements that the electrical device again functions as it should, the data analysis module 104 may permit use of the electrical device in the energy management operations.

The system 100 may further comprise a control decision module 106. The control decision module 106 may be configured to determine suitability of the electrical devices for one or more energy management operations. The suitability may be determined, for example, based the characteristics of the electrical devices in the device group and one or more criteria. Based on the suitability of the electrical devices of one or more device groups, the control decision module 106 may decide one or more control groups. Each control group may comprise one or more device groups.

The one or more criteria may be associated with suitability of device groups for grid balancing, such as reserve operations. The reserve operations may be related to, e.g., frequency containment reserves used for the constant control of frequency of the electric grid, manual frequency restoration reserve, or other balancing operations for the electric grid. The control decision module 106 may be configured to optimize operation of the device groups based on one or more external signals indicating a need for performing control operations to assist in the balancing of the electric grid. The external signals may be received from one or more external sources 110. The control decisions can be made based on real time information about the electric grid balance as well as a state of individual electrical devices, e.g., whether the electrical device is currently on (consuming energy) or off (not consuming energy). The control decision module 106 may determine if a certain device group is to be controlled to participate in upregulation for underfrequency events or downregulation for overfrequency events. The control decision may be further based on monitored data of electricity price, wherein the electricity price is indicative of the demand and supply state of the electric grid. The control decisions may be also based on how the control affects CO₂ emissions. For example, total consumption of the electrical devices of a certain control group may be controlled to be decreased when electricity production with renewable energy sources is decreased. The amount of electricity production with renewable energy source may be obtained by the system 100 from an operator of the electric grid and/or based on data stored at the data collection device 102 when some of the electrical devices are identified as local energy production devices or batteries storing the locally produced energy.

The control decision module 106 may be configured for energy management and optimization of operation of the electrical devices. The control decision module 106 may be further configured to plan control groups which respond to changes in electricity prices and optimizes energy consumption based on the data from the data collection module 102 and/or external sources. Further, optimization of energy storage solutions may be planned by the control decision module 106 to balance energy consumption peaks. The control decision module 106 may be further configured for grid analysis and dynamic balancing. The balancing of loads may be done dynamically in real time by the control decision module 106. Based on collected data and measurements from the data collection module 102 and the data analysis module 104, energy saving strategies may be developed and implemented by the control decision module 106.

The system 100 may further comprise a control module 108. The control module 108 may be configured to transmit control instructions to be applied by the plurality of electrical devices. The control instructions may be transmitted to the electrical devices and/or to local or remote control devices coupled with the electrical devices. The control devices are configured to control energy consumption of the coupled (e.g., via a power switch or communicatively coupled) electrical devices by turning on/off power supply to the respective electrical device or by adjusting power consumption related settings of the respective electrical device. The control instructions may be transmitted based on the decisions made by the control decision module 106. The control instructions may be transmitted by the control module 108 for each electrical device belonging to the control group for which the control instructions was determined.

In one example, the external signals may be indicative of a need to activate reserve capacity for electric grid balancing. The reserve capacity to be activated may comprise electrical devices comprised in one or more control groups. For example, there may be an agreement that the system 100 restricts energy consumption of a certain amount based on a certain signal indicative of the need to activate the reserve capacity. The control module 108 may be configured to transmit control instructions to the at least one control group configured to provide reserve capacity, to cause the electrical devices of the control group to reduce energy consumption in response to the received signal indicative of the need to activate the reserve capacity. The at least one control group and/or the instructions may be determined by the control decision module 106. The system 100 can decide to shift certain electrical devices, device groups, to a flexible control group that allows energy consumption of the electrical devices to be adjusted based on reserve market signals. This helps to stabilize the electric grid by providing much-needed flexibility during periods of high demand or limited supply, addressing the inherent volatility of energy grids. For example, non-critical devices or those with flexible usage patterns may be assigned to the control group(s) participating in reserve markets or demand response based control.

In general, the system 100 may be configured to classify the electrical devices 112 to different groups. Grouping may be performed based on analysed data of the respective electrical device, such as the load type and/or device type and one or more usage profiles of the electrical device, such as a user profile and/or energy consumption profile. Hence, similar devices and/or similarly used devices can be grouped together and controlled at the same time. This enables to decrease communicational complexity of the system and streamlines decision-making. An energy consumption profile provides information on when, where, and how energy is being consumed by the electrical device.

Although control of the devices may be centralized in the system 100, the decision-making may be distributed between multiple edge processing devices 114 which may process device-specific commands and perform primary analysis tasks. This approach may enable to decrease load of the system 100 and improves scalability of the system 100.

The system 100 is able to change grouping of the electrical devices 112 dynamically based on the state of the grid and other external signals, as well as based on an operational state of the electrical device. This may enable a flexible energy management system that ensures efficient and optimal use of resources in changing situations.

The system 100 can continuously monitor a state of the electrical devices 112 and needs of the electric grid. The system 100 is able to provide control commands automatically, which decreases a need for manual intervention and ensures efficient and independent functioning of the energy management. The system may enable a large-scale integration to the electric grid as a virtual power plant. Hence, the system 100 enables hundreds or thousands of electrical devices to be grouped and controlled in real-time for the needs of the electric grid, such as to balance the supply and demand in the electric grid especially when there is varying supply of renewable energy. The system 100 may utilize application program interface, API, to enable direct and seamless communication between the system 100 and external sources 110. API interface can support all needed operations, including reception and transmission of data, control commands and information updates. API and the modular structure may enable fast and effortless deployment of the provided energy management operations in different kinds of electricity market environments. The modules may be preconfigured in order to enable effortless deployment and to minimize a need for customisation when installed.

The system 100 may analyse and predict electricity market information, indicative of the balance of supply and demand situation of the electric grid, and adjusts operation of the electrical devices 112 based on the information. This enables to take advantage of the fluctuations of the supply and demand efficiently, thereby providing value to the management of electricity network. The system 100 can evaluate flexibility capacity of the electrical devices 112 in real time, meaning how much and within which time period the load of the electrical devices 112 can be decreased or increased in certain circumstances in order to improve balance of the electric grid. In addition, the system 100 may be able to select the electrical devices which best match the energy management needs of the electrical network. The system 100 may analyse operational mode and capacity of each electrical device in real time, and dispatch control commands to those electrical devices that can best address the control needs occurred in the electrical network. The electrical network can comprise the system 100, the electrical devices 112, and the electric grid.

The system 100 can be configured to automatically register detected new electrical devices available for energy management and configure the new electrical devices to suitable control groups as soon as the electrical device is identified and its suitability for one or more energy management operations is determined. This automation may enable minimizing need for manual configurations and can ensure that the monitored electrical devices 112 are correctly configured from the start. The system 100 may further synchronize information in real time with the external sources 110 for up-to-date control decisions. In one example, reliability of the system 100 can be improved by using local caching of data, wherein the latest external signals and control decisions are stored. This can enable continuation of operation of the system 100 also in cases where a connection to the external sources is temporarily disconnected, and thus, increases operational reliability of the system 100.

Communication between the edge processing devices 114 and/or modules 102, 104, 106, 108 may be implemented wirelessly, such as based on wi-fi or zigbee protocols. Alternatively, or in addition, the communication may be implemented using ethernet, bus connections (e.g., modbus), or the like. Communication between the cloud server 116 and the edge processing device(s) 114 and/or the modules 102, 104, 106, 108 may be implemented, for example, using protected protocols, such as message queuing telemetry transport, MQTT, transport layer security, TLS, HTTP/REST or the like. In one example, the edge processing device(s) 114 may be configured to communicate with the cloud server 116 using wi-fi, mesh (e.g., wi-fi or zigbee), or ethernet connection. The edge processing device(s) 114 may be configured to communicate with other modules 102, 104, 106 and/or 108 via a modbus connection, which bus connection may be further used for reading meters and sensors associated with the monitored electrical devices. The system 100 may further utilize an authentication procedure wherein each edge processing device 114 is authenticated and authorized before connecting to the cloud server. This may enable that only accepted edge processing devices 114 can send and receive information to/from the cloud server 116. The edge processing device 114 can receive updated device type identification models from the cloud server at certain intervals, such as once a day, or when needed for example when the system 100 detects substantial changes in behaviour of the electrical devices 112. The identification models may be updated by the cloud server, for example, based on historical data such as long-term statistics of usage of the electrical devices 112 or based on real time data such as a sudden change in energy consumption of one or more of the electrical devices. The edge processing device 114 may update its local identification models based on the received updates immediately or at times of low usage of the electrical devices 112.

In one example, the edge processing device 114 may be configured to perform primary identification of device types of the electrical devices 112, and then send the results to the cloud server 116 for more detailed analysis. However, the edge processing device 114 may be designed to also operate independently, such as to identity the device types of the electrical devices and optimize operation of the electrical devices without constant additional information received from the cloud server 116. The edge processing device 114 may be capable of identifying device types of the electrical devices 112, for example, based on their energy consumption and usage profiles and to update the profiles based on detected seasonal variations in the monitored data. The cloud server 116 may store one or more machine learning models (e.g., CNN and/or RNN based models) configured to perform deeper device type analysis and provide more detailed profiles about the energy consumption and usage times of the electrical devices 112. In one example, predicting the type of device can be done by the cloud server 116 using one of the following algorithms: neural networks, logistic regression, decision trees, rule inductors, K-nearest neighbors (KNN), naive bayes, or support vector machines. It is noted that the list is one example and applicable algorithms are not limited to the given list of algorithms. In one example, the algorithm(s) may be created using deep learning frameworks such as tensorflow or pytorch. The cloud server 116 may be further configured to determine and update information for control of the electrical devices 112 based on received data from the edge processing device(s) 114, such as results of the primary analysis and monitored data, the received external signals and/or predicted state of the electric grid, and return the control information to the edge processing device(s) 114 for further use.

Based on the analysis performed by the edge processing device(s) 114 and/or the cloud server 116, the edge processing device(s) 114 may control operation of the electrical devices 112. For example, the edge processing device 114 can decide and control when certain device groups are switched to an energy saving mode, a normal mode, or a certain energy management operation mode. The device groups may be controlled to switch from one mode to another mode, for example, based on the external signals or other preset triggers. The triggers may comprise one or more of the following: indications of a state of the electric grid (e.g., frequency, electricity stock prices, or the like), user priorities (e.g., prioritization based on caused CO₂ emissions or availability of renewable energy), or a threshold for consumption (e.g., to shift consumption from peak hours to hours of lower consumption).

Control of the electrical devices 112 may be further based on one or more other criteria, such as criticality of the device to ensure safety or health. For example, electrical devices detected as critical devices may be grouped, and said group may be determined to be in the normal mode by default without the external signal-based switching of the operating mode. Alternatively, a part of the capacity of the critical devices may be used for energy management operations such that core operations of the respective devices are not jeopardised.

The external source 110 may provide data associated with electric grid. The data may comprise signals received from the electric grid, associated entities participating in production and consumption of electricity provided by the electric grid and/or parties managing operations of the electrical network. The data may comprise information about a current state of the electric grid, an indication if the frequency of the grid is above or below its nominal value, indications about fluctuations in balance of the grid, predictions about the state/balance of the electric grid, and the like.

The cloud server 116 may be configured to store and analyse historical data about usage of the electrical devices 112, and based on the analysis predict future consumption and usage profiles of the electrical devices 112. The predicted profiles may be used by the cloud server 116 to train and optimize machine learning models stored at the cloud server 116.

In one example, the cloud server 116 may use a convolutional neural network, CNN, and recurrent neural network, RNN, models configured for improved identification of device types. The CNN may process current usage profiles of the electrical device 112 based on the monitored data received from the edge processing device(s) 114, and analyse special features of the electrical devices 112, such as harmonic distortion and consumption spike information. The RNN model may be configured to analyse time-dependent information obtained from the monitored data and predict usage profiles of the electrical devices 112. The cloud server 116 may further predict electricity supply and demand information of the electric grid using long short-term memory, LSTM, models. The LSTM models can be configured to analyse changes in the supply and demand and anticipate future periods of peak demand. The predictions may be performed, for example, for the next day, for the next week, or for a longer period. The predictions may be based on long-term historical data of the supply and demand information of the electric grid, real-time information of the supply and demand, and electricity market trends which may anticipate future supply/demand. The cloud server 116 may be configured to continuously update the stored models based on received new data such that the models can adapt over time to the environment in which they are used. Hence, accuracy of the identification and prediction models can be improved by utilizing, for example, real-time external signals and monitoring data, as well as historical data. The predictions can be used to make control decision, and perform control of the electrical devices 112, also before the need for energy management is indicated by the real-time external signals.

FIG. 2 illustrates an example of an apparatus configured to practice one or more example embodiments. Apparatus 200 may comprise a module of the system 100, or in general any device configured to implement functionality described herein. The apparatus 200 may comprise, for example, a computing device such as edge processing device 114, data collection module 102, data analysis module 104, control decision module 106, control module 108, a server device such as cloud server 116, or a combination thereof.

Apparatus 200 may comprise at least one processor 202. The at least one processor 202 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 200 may further comprise at least one memory 204. The memory 204 may be configured to store, for example, computer program code or the like, for example operating system software and application software. Memory 204 may comprise one or more volatile memory devices, one or more non-volatile memory devices, and/or a combination thereof. For example, the memory may be embodied as magnetic storage devices (such as hard disk drives, magnetic tapes, etc.), optical magnetic storage devices, or semiconductor memories (such as mask ROM, PROM (programmable ROM), EPROM (erasable PROM), flash ROM, RAM (random access memory), etc.). Memory 204 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM).

Apparatus 200 may further comprise a communication interface 208 configured to enable apparatus 200 to transmit and/or receive information. The communication interface may be configured to transmit information, such as control commands, to one or more electrical devices. The communication interface 208 may be further configured to receive information from the one or more electrical devices, such as monitored electrical devices or sensors monitoring the electrical devices. The communication interface 208 may be configured to enable bidirectional communication with different entities of the system 100, as well as entities external to the system 100. Communication interface 208 may comprise one or more radio transmitters or receivers, which may be coupled to one or more antennas or apparatus 200, or be configured to be coupled to one or more antennas external to apparatus 200.

Apparatus 200 may further comprise other components and/or functions such as a user interface 210 comprising at least one input device and/or at least one output device. The input device may take various forms such a keyboard, a touch screen, or one or more embedded control buttons. The output device may for example comprise a display, a speaker, or the like.

When apparatus 200 is configured to implement some functionality, some component and/or components of apparatus 200, such as for example the at least one processor 202 and/or the at least one memory 204, may be configured to implement this functionality. Furthermore, when the at least one processor 202 is configured to implement some functionality, this functionality may be implemented using program code 206 comprised, for example, in the at least one memory 204.

The functionality described herein may be performed, at least in part, by one or more computer program product components such as software components. According to an example embodiment, apparatus 200 comprises a processor or processor circuitry, such as for example a microcontroller, configured by the program code 206, when executed, to execute the embodiments of the operations and functionality described herein. Program code 206 is provided as an example of instructions which, when executed by the at least one processor 202, cause performance of apparatus 200.

Alternatively, or in addition, the functionality described herein can be performed, at least in part, by one or more hardware logic components. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), graphics processing units (GPUs), hybrid programmable devices, microcontrollers (MCUs), system-on-chip with embedded artificial intelligence capabilities, digital signal processors (DSPs), or the like. For example, the apparatus 200 may comprise hybrid programmable devices for complex tasks such as real-time analysis, DSPs for detailed signal analysis such as harmonic detection and current/voltage analysis and MCUs for simpler control and data collection tasks to improve cost-efficiency and power-efficiency.

Apparatus 200 may be configured to perform, or cause performance of, method(s) described herein or comprise means for performing method(s) described herein. In one example, the means comprises the at least one processor 202, the at least one memory 204 including instructions (e.g., program code 206) configured to, when executed by the at least one processor 202, cause apparatus 200 to perform the method(s). In general, computer program instructions may be executed on means providing generic processing functions. The method(s) may be thus computer-implemented, for example, based on algorithm(s) executable by the generic processing functions, an example of which is the at least one processor 202. The means may comprise transmission or reception means, for example one or more radio transmitters or receivers, which may be coupled or be configured to be coupled to one or more antennas. Although apparatus 200 is illustrated as a single device, it is appreciated that, wherever applicable, functions of apparatus 200 may be distributed to a plurality of devices.

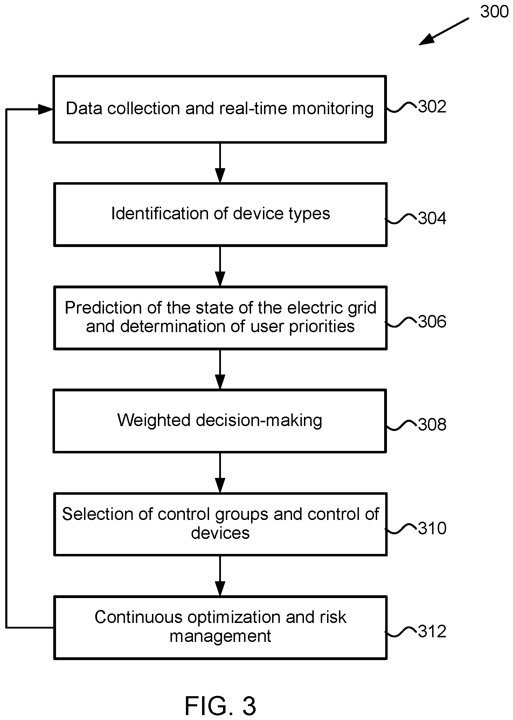

FIG. 3 illustrates an example of an energy management procedure 300. The energy management procedure may be performed, for example, by the system 100.

At operation 302 the system 100 may perform data collection. In one example, the collection of data may be done with sensors and/or measuring devices and in real-time. The sensors and/or measuring devices may be external devices communicative coupled with the system 100, or the system 100 may comprise the sensors and/or measuring devices. The data may include, for example, at least one of energy consumption, current, voltage, an indication about a functional state (e.g., an active, an idle, a critical mode of operation), an indication about an operational mode, power and/or harmonic distortion of an electrical device being measured. The used sensors may have a certain measurement resolution and the collected measurement data is saved for analysis. The system 100 may also determine data to be used for analysis based on the sensor data. For example, the system 100 may determine energy consumption of individual devices with respect to time based on real-time values received from the sensors within a certain period of time. The system 100 may be further configured to receive real-time information about a state/balance of the electric grid. The collected data may be stored and/or transmitted to be processed by the edge processing devices of the system 100.

At operation 304, the system 100 may perform analysis of the collected data. In one example the analysis may comprise identification of device types. The edge processing devices may be configured to perform primary analysis of the data. Based on the primary analysis, the edge processing devices may perform basic classification of device types of the measured electrical devices. The primary analysis may comprise at least one of FFT analysis, analysis of harmonic features, or statistical analysis.

With the FFT analysis, a fourier transform can be performed on a signal to convert time series data to frequency domain. This enables to distinguish different device types based on consumption patterns, such as device types having a continuous load or a cyclic load. For example, when the signal is broken down to different frequency components, the system 100 can identify harmonic features which correspond to operation of a certain device type (e.g., a motor or a heating element). Certain devices, such as the motors and heaters, produce recognizable harmonic features, such as certain harmonic components (e.g., 3rd, 5th, 7th and 9th harmonic components). Further, for example harmonic features produced by electric sauna stoves and water heaters are different in terms of the level of harmonic components occurring during power spikes and heating cycles. In one example, the FFT analysis may be performed using a discrete fourier transform algorithm. Running FFT-algorithms for the primary analysis in the edge processing devices can reduce latency and improve real-time performance of the system 100. The statistical analysis may comprise analysis of statistical parameters based on the current and power consumption data collected from the monitored device. The statistical analysis may be based on, for example, average values, variance and consumption peaks. In one example, these values may help identify if the load type of the device is continuous load (e.g., a heater) or varied and cyclically high load (e.g. a motor). The system 100 may use, for example, NumPy or SciPy libraries of Python, or other similar tools, to calculate variables needed in the statistical analysis.

In addition, the system 100 may use machine learning models to identify the device types based on their electrical properties/features. In one example, the system 100 may analyse the consumption data of the electrical device against known consumption models of device types. In addition, a user/energy consumption profile can be formed for all monitored devices based on energy consumption of the device with respect to time.

Based on the performed analyses, the monitored devices are grouped. In example, the electrical devices can be grouped based on load type (e.g., continuous or varied load). Based on the gathered data, the system 100 can be configured to create a use model of the electrical device which describes operation of the device in different load modes. In addition, or alternatively, harmonic distortion spectrum analysis may be performed by the system 100 to identify the device type as certain devices produce specific harmonic distortion. The ratio and relationship of the harmonic distortion components may also be analysed to increase the accuracy of the identifying the electrical device. For example, the harmonic distortion of an electric heater and hot water tank can differ in regard to the power peaks and usage cycle of the device for heating. Analysis may also be performed based on methods associated with time series data, such as by using Auto Regressive Integrated Moving Average (ARIMA) or other predictive models, which analyse repetitiveness and duration of use. This may help in identifying devices which have regular usage periods (e.g., a fridge) and which have more occasional usage periods (e.g., a microwave oven). With analysis of usage periods and usage times of the monitored devices, the system 100 can identify how often the respective device is active and for how long the device stays on. This enables, for example, identification of a continuous but moderate energy usage of a floor heating system.

In addition to the primary analysis, machine learning models may be used by the system 100 when device identification requires complicated data models. Machine learning models such as CNN and/or RNN can be used to help identify devices based on signal features and consumption profiles obtained from the collected data. The system 100 may use pre-trained models for identification of typical device types. The system 100 can also learn based on new data, which allows the machine learning models to be scalable and adjustable for different environments and devices to be identified.

In one example, the system 100 may be configured to calculate a probability of identification of device type of the electrical device. The process for probability calculation may have several steps. First, the collected data may be pre -processed to obtain characteristics of the monitored devices. For example, the system 100 may determine at least one of energy consumption with respect to time, usage times, and/or harmonic components of the individual devices based on the collected data. The pre-processed data may be then fed to the machine learning models and/or for statistical analysis. During pre-processing, the collected data may be scaled and normalised so that the consumption of different devices may be compared and erroneous identification results may be avoided. FFT analysis and harmonic analysis may be used to identify device consumption characteristics such as peak consumption, cyclical usage and continuous consumption.

The next step is to perform statistical analysis and to define device type groups. The statistical analysis may be used to identify usage profiles of the monitored devices, and to group the monitored devices based on their operation and/or the usage profiles. The statistical analysis may be performed, for example, using Bayesian decision model and probability distributions. For example, the system 100 can calculate an average energy consumption of the monitored devices, variation in consumption and consumption peaks based on the pre-processed data. These statistical values may be compared with known usage profiles (e.g., usage profiles of a fridge, an electric sauna stove, a water heater, etc.). The Bayesian decision model may be used to form a default usage profile for each device type. Based on the collected data, prior and posterior distributions can be determined for each monitored device. This allows the calculation of probabilities for different device types based on measured consumption and historical data.

After the pre-processing and statistical analysis of the collected data, the machine learning models may be optionally used for detailed analysis of the device types. The data obtained from the pre-processing and/or statistical analysis can be provided as an input for one or more machine learning models, such as the CNN or RNN based models, which may be used to further analyse characteristics of the monitored devices, such as complex consumption profiles, and predict the types of devices. In one example, the CNN/RNN models may be pre-trained based on known device types. These models can be configured to analyse the consumption of each device and produce classification results with a certain probability estimate for each device type. The CNN/RNN models may be continuously updated and modified based on collected new data in order to enable identification of new device types. The machine learning based analysis may be performed in a cloud.

After analysis steps have been completed, the system 100 can be configured to determine the probability of each device type for each of the monitored devices. This can be done by combining the results of statistical analysis and the machine learning models. Alternatively, the probability can be determined based on the FFT and/or statistical analysis. A probability coefficient may be given to each device based on certain factors. For example, the probability coefficient may be determined by analysing how much the usage profile of the device corresponds to the known usage profiles of different device types, how much harmonic components of the electrical device match harmonic components occurring at certain device types, and/or how much consumption profile of the device match known consumption profiles of different device types. Results of the analysis can be combined to calculate posterior distributions using the Bayesian decision model, wherein prior information and likelihoods based on observed data are combined for different device types.

For example, the system 100 may determine that the device being analysed is a water heater with 80 % probability as the device has approximately constant consumption and usage times of the device are typical for a water heater (e.g., usually on at morning and evenings), and harmonic components of the device correspond to harmonic components of a heating device. The system 100 may further determine that the same device is an electric sauna stove with 15 % probability as the device had periods of high instantaneous consumption, but the usage times did not perfectly match regular usage times of a water heater. The system 100 may further determined that the same device is a floor heating system with 5 % probability as the usage profile of the device partly matches the usage profile of a floor heating system, but the usage times of the device are shorter than with floor heating systems.

A final step is to set thresholds for decision making. The identification of a monitored device may be accepted if the probability of a certain device type is over a threshold value (e.g., 75%). If the probability does not meet the set threshold, classification of the device is uncertain and the device type of the device may be reanalysed later with additional data or a more detailed analysis. The more detailed analysis may be performed by the one or more machine learning models, for example in the cloud. The one or more machine learning models may provide improved accuracy for identification especially in cases where the device has complicated or highly varying consumption profile.

Next, training of the one or more machine learning models is described. First, training datasets are formed. Measurement data to be used for training may be collected from different types of electrical devices in different environments. For example, the measurement data may comprise data collected from hundreds of devices located in household, office, and industrial (e.g., factories) environments. The dataset may comprise measurements associated with energy consumption. The measurements may include power, current, voltage, consumption peaks, and times of constant consumption. Data regarding use times (e.g., operating times based on on/off states of the device or detected energy consumption) and cyclicity of use can also be used in the dataset. This means that data indicative of when and how often the device is used and for how long it is used is obtained. Harmonic signals may also be used in the dataset. Harmonic distortion can be generated by different types of electrical devices, indicating the electrical behaviour of the electrical device. Datasets can be collected using real-time measurements from sensors and stored in the cloud for analysis. At least part of the analysis can still be done in the edge processing device(s). In one example, sensors such as smart meters and energy monitoring devices may collect information about the consumption of the measured device under different conditions.

Based on the data collected for training, two datasets may be formed: training data and test data. The training data may include pre-classified examples of different device types. Based on the training data, the machine learning model(s) learn to detect connections e.g. between consumption profiles and use profiles of the device types. The test data may be used to evaluate how well the trained machine learning model can identify device types with new input data. The test data is not used as training data. Before training data can be entered into machine learning models, certain features may be obtained based on the data for use by the one or more machine learning models. These features may include mean of energy consumption (e.g., an average energy consumption of a certain time period), variance and peaks of consumption within a certain time period, harmonic distortion, frequency of use and duration of use periods.

When the training data is ready and the features have been obtained, the machine learning model may be trained to identify device types. Training may be done, for example, by using supervised learning. In the supervised learning, the machine learning model may be trained by using classified data, where each data point is labelled as a device type (e.g., "fridge", "electric stove", "laundry washing machine", "lighting", etc.). The model can learn to associate the consumption profile and usage characteristics of an electrical device with a specific device type. Convolutional or recursive neural networks may be used to analyse complex consumption profiles. CNN models may be useful at detecting patterns and features in the consumption signal, while RNN models may be suitable for processing time-dependent signals. The training data may also be used to optimize hyperparameters of the machine learning model, such as learning rate, number of layers and number of nodes in the neural network. This optimization can be done through cross-validation, where the data can be split into several parts and the model is trained and validated several times to find the best parameters.

When the machine learning model is trained, the trained model can be evaluated with the test data. The test data may contain data that the model has not seen previously. This is done to confirm that there is no overfitting, meaning that the model is able to learn to identify new devices and has not only learned the characteristics of the training data. The performance of the model can be determined based on certain indicators. In one example, the indicators can be related to accuracy, recall, precision and/or Fl-score. Accuracy means how many device types the model correctly identifies from the test data. Recall and precision assess how accurately the model identifies specific device types and how often it makes errors. Fl-score is the harmonic average of the recall and precision metrics that gives assessment of the model's performance.

The machine learning model may need further optimization and relearning after training. After the machine learning model has been tested, new datasets may be added. These new datasets may include new electrical devices or modified consumption profiles. This process is called fine-tuning, where the parameters of the machine learning model are updated for the new data. When new data is received, the machine learning model can be retrained to recognise the new devices. New training dataset may be needed to keep the machine learning model up to date. The training datasets may allow the trained machine learning models to identify complex electrical devices accurately and to adapt over time to different operating environments. Training datasets may be extended and updated with new device types, keeping the system 100 up-to-date. Training datasets collected in different environments, such as residential or industrial environments, to enable the machine learning model to adapt to the specific needs of each environment.

At operation 306 the system may obtain predictions on the state of the electric grid and user priorities. In one example, the system 100 may be configured to perform predictive analysis about future changes in the demand and supply of the electric grid. The system 100 may also receive the predictions, indications of the future changes, as well as information about the current state of the electric grid from one or more external sources, such as electricity market systems. Based on the current state and/or estimated changes in the demand and supply, the system 100 may perform decisions on how to control the monitored electrical devices.

In addition to the information related to the electric grid, the system 100 may be configured to consider one or more priorities set by a user for the control of the monitored devices. The user priorities may be related to, for example, increasing use of green energy, decreasing carbon dioxide (CO₂) emissions or balancing the state of the electric grid. The system 100 may receive inputs from the user to prioritize certain type of control for one or more device groups, for example. In one example, the user may prioritize personal comfort. If a user prioritizes comfort, they can set specific devices to remain on during certain times to ensure convenience, preventing other automated controls from overriding this setting during those periods. The electrical devices may also be grouped depending on these preferences, with devices that contribute most to energy savings, carbon dioxide reduction, or user comfort being assigned to control groups configured to prioritize the respective preference.

At operation 308, the system 100 may perform control decisions based on weighted factors. Weighting may be used to enable prioritization of certain factors in changing situations associated with the electric grid. For example, the system 100 may be configured to set different weighting factors for different control groups. Each control group may comprise one or more of the identified electrical devices. In one example, the control groups may be formed at least for grid balancing based control, energy saving based control and for devices to be operated in a normal mode. For example, when the state of the electric grid indicates that balancing is needed, the control group for grid balancing may be given the highest weighting. In one example, the control group for grid balancing may be configured to participate in reserve markets. On the other hand, when the supply and demand of the electric grid needs balancing, but there may not be need participate in the reserve markets, the control group for energy saving may be given the highest weighting. When the state of the electric grid is balanced and there is no need to limit consumption, the control group for normal operation can be given the highest weighting. In one example, depending on user priorities and/or regulations for energy management, control groups for green energy based control can be given the highest weighting when there is available electricity produced by renewable energy sources.

Additional parameters may be added to the decision-making process that considers grid balancing. A weighting factor of the grid balance analysis based on received signals and/or predictions of the state of the electric grid can be considered in the decision-making process. At higher grid balancing demand, an electrical device can moved to the grid balancing control group, and at lower grid balancing demand control of the electrical device can be prioritised for energy saving or normal mode. The system 100 can continuously calculate the grid demand conditions and switch electrical devices to different control groups in real time as balancing needs of the electric grid change. Dynamic optimisation can be incorporated, where electrical devices are caused to continuously switch between different control groups depending on current supply and demand. Optimisation is based on both instantaneous information (real-time supply and demand situations in the electric grid) and long-term forecasts (projected supply and demand situations). The optimisation algorithms can continuously calculate the benefits of each control group and predict when it is recommended to move the electrical device to another state (on/off/standby, or the like). Alternatively, or in addition, an electrical device can be part of multiple control groups, and operate according to the control instructions received from one or more of the control groups, e.g., based on latest received control instructions.

The control group for green energy based control, in particular, may be activated when a trigger condition is met, such as predicted excess renewable energy production. Otherwise, the electrical device can act based on the conditions of other assigned control groups. This flexibility may ensure that the controlled devices can contribute to multiple objectives, like maintaining energy efficiency, maximizing renewable energy usage, and being available to support grid stability when required.

The combination of these elements may allow the system to dynamically determine both the best course of action for controlling electrical devices and the optimal grouping of those devices. Control groups and/or control instructions may be adjusted as conditions change, such as changes in user preferences, availability of renewable energy, maintenance schedules, updates in regulatory requirements or state of the electric grid. This may ensure that energy optimization is achieved without compromising user comfort, regulatory compliance, or the operational integrity of critical systems. For example, regulations related to safety or mandatory operational hours for certain building systems may be configured to be adhered to, overriding any other criteria when necessary.

The system 100 may give priority to critical device types that cannot be interrupted, such as server room cooling systems. Less critical device types, such as lighting or standby equipment, can be weighted to move into the energy-saving or grid balancing control group when it may be needed based on the signals indicative of the balancing needs. Critical device types may be given a high weighting value to remain in normal mode, unless need for grid balancing rises which may cause a switch of control group. Non-critical device types may be given a lower weighting for normal mode and a higher weighting for energy saving or grid balancing modes. Grid balancing weighting can be based on real-time production information and demand forecasts. If there is a significant drop in production or demand peaks are forecast, grid balancing is given a higher weighting in the decision-making process. This allows the electrical device(s) to be switched to the grid balancing control group whenever necessary. The demand situation can change rapidly, so it is important for the system 100 to adapt continuously. Dynamic grid balancing can be based on short and/or long-term forecasts, allowing the device to respond optimally to changes. If a demand price spike is expected based on long-term forecast weighting, the electrical device can be caused to optimize energy consumption such that the demand during the predicted spike may be lowered.

The system 100 can adapt to different environments and operating situations dynamically, weighting different factors according to the scenario. For example, energy saving mode for lighting equipment may be prioritized when the facilities are not in use. Device types determined to be critical can be given a higher weighting to normal mode, while less critical device types are shifted to energy saving or grid balancing mode depending on the grid situation. The system can use continuous learning to analyse past decisions and the impact of weightings on equipment performance and grid benefit. Algorithms can learn to improve decision making over time, and weightings are adjusted accordingly. AI and machine learning models can optimise weightings based on which choices have produced the best outcome. The system monitors the results of decisions and dynamically changes the weights for future decision-making. In one example, the system 100 can be configured to detect, based on the monitored sensor data, when a device is in use by a user and when not (e.g., the sensor data indicating that a television is turned on/off), and the system 100 may be further configured to dynamically change weighting and/or control group of the respective device accordingly. For example, the control group of the device may be changed based on a detected trigger, such as the operational state (e.g., on/off) of the device, wherein the change may be configured to be performed immediately, after a preset delay or according to a timetable.

At operation 310, the system 100 may perform selection of control groups and control the electrical devices based on the control groups. Before or after the weighted scores have been calculated, the system 100 can make a decision on which control group to assign the electrical device or device group to. The system 100 may be configured to transmit a command to each electrical device of the control group to adjust their operation based on the weighted decision making. For example, the system 100 may command the control group to enter a normal mode, an energy-saving mode, a grid balancing mode and a partial transfer mode. When normal mode is set, the device continues to operate normally without any specific optimisation. When energy-saving mode is set, the device is placed in energy-saving mode, where operation of the device is either suspended or optimised to reduce consumption. When grid balancing mode is set, this means that the device participates in the reserve market, providing flexibility to the electric grid according to balancing needs. Partial transfer mode means that if the device is critical but part of its capacity can be transferred to the flexibility mode, the system will use only part of the capacity of the device for the grid balancing (for example 50%). The system 100 may perform optimization approximately in real time, for example, based on signals indicative about the balance state of the electric grid and usage profile of the electrical device. For example, the system 100 may control the electrical device such that at least part of energy consumption of the electrical device is shifted from hours of high demand to hours of lower demand of the electric grid.

The system 100 can be configured to add and/or remove electrical devices from/to the control groups based on different criteria. The criteria may comprise at least one of consumption profile, use profile, device type, response time to load changes, capacity to increase/decrease consumption, current operational state (e.g., on or off state) or current energy consumption of the respective electrical device. The criteria used for determining control group of an electrical device may be preset. For example, information about current and/or future energy consumption of the electrical device or device group may be used to estimate if the electrical device/device group provides enough capacity to participate in reserve market based grid balancing, or if they should be shifted to energy saving control group. In one example, different device types may have preset control groups, such that the system 100 may not need to evaluate suitability of the electrical device for each control group. This can streamline the decision process. For example, lighting equipment may be selected to be included in the normal operation control group and energy saving control group, because control of the lighting equipment may not produce the best impact for the needs of grid balancing operations, such as reserve markets. Further, air conditioning equipment may be preset to be included in the normal operation control group and grid balancing control group, but not in the energy saving control group due to criticality of operation of the device type.

The decision method may be scalable to different environments such as residential, office and industrial environments. This may require adapting the decision making to the types of devices and consumption patterns in different scenarios. The choice of the control group of the electrical device may depend on how critical operation of the electrical device is. If the operation of the electrical device is not critical, it can be automatically selected to be part of the energy saving control group or grid balancing control group to maximise the grid balancing benefits. In turn, devices responsible for functions that cannot be interrupted, may be selected to remain in normal operation control group unless there is a significant need for grid balancing. The degree of utilisation of the devices and the criticality of the operations can be added as a weighting criterion for control group selection.

The suitability of the electrical device for one or more control groups may be determined, for example, based the characteristics of the electrical devices in the device group and one or more criteria. In one example, the criteria may be based on electric grid analysis. For example, the criteria can be based on real-time electric grid balance signals or predictions of the electric grid balance. If the signal is, or is predicted, to pass over a certain threshold value, the system 100 can be configured to move the one or more electrical devices from a normal mode control group into energy saving control group or grid balancing control group. For example, weighting may be based on real-time electric grid balance signals or predicted change of the signal. Further, the criteria can be based on the users priorities. For example, the criteria may be based on economical optimization or CO₂ optimization. If the minimizing of CO₂ emissions is a priority to the user, the system 100 can be configured to prioritise use of renewable and low emission energy, even on the cost of grid balancing. The weighting factors in this example may be economical optimization or CO₂-optimization. In another example, the criteria may be based on the criticality and operational constraints of the electrical device. Criticality may describe how important the electrical device is to the functioning of a certain system or building. One example of operational constraints may be the approach of maintenance. In both cases, the system 100 may determine to perform only a partial move of the capacity of the electrical devices to different control groups. The weighting factors in this example can be the criticality of the electrical device or the maintenance interval and operational constraints. The criteria may also be based in the usage profile of the electrical device, e.g., how often or continuously the electrical device is in use. The weighting factor in this situation may be usage profile or operating cycle. For example, electrical devices that are in a standby mode may be given a higher priority for an energy saving control group and/or grid balancing control group than electrical devices considered to be a critical device types. Further, refrigerators may be configured for continuous operation, but the system 100 can decide to change the operation times due to heat latencies such that consumption of the refrigerators can be shifted from times of high demand in the electric grid. Decisions and weighting may also be performed by the system 100 based on regulations and environmental factors. If there exists for example CO₂ emission regulations or incentives to reduce CO₂ emissions, this information can be fed to the system 100, and the system 100 may then choose to emphasise energy-saving measures based on the fed information. The user may also have local incentives such as tax credit or energy-saving bonuses. In this case, the weighting factors may comprise environmental requirements and CO₂ emissions or local incentives.

Based on the weighting factors, the system 100 may be configured to calculate to the electrical devices an optimal control group. This may also refer to determining a control group for which the electrical device receives next control instructions. For example, the system 100 may determine weighting factors for the one or more criteria with respect to each of the control groups, and calculate points for each control group based on the determined weighting factors. Based on the calculated points, the system 100 can determine the control instructions to be transmitted. The control instruction decision may be, for example, based on the control group having the highest points. For example, when there is a significant change or event in signals indicating the state of the electric grid, e.g., the demand in the electric grid has increased above a certain threshold, the control group for grid balancing based control may have the highest points due to highest weighting for real-time electric grid balance signals. Therefore, all electrical devices in said control group may be instructed to decrease or stop their power consumption.

The system 100 may be configured with different control groups, and to transmit control commands to/for the electrical devices based on the control group the electrical device belongs to. For example, the system 100 can be configured with a control group for optimization of use of green energy. The electrical devices of the control group may be controlled to consume as much as possible energy produced by renewable energy sources. In other words, the system 100 may prioritize energy consumption of the electrical devices to times when there is available electricity produced by the renewable energy sources, such as solar or wind energy, despite of signals indicative that demand in the electric grid is high. This may enable to minimize CO₂ emissions produced by the electrical devices. In one example, the system 100 may be configured with peak shaving control group. For this control group, the system 100 may be configured to command the respective electrical devices to decrease or shift energy consumption from hours of peak demand in the electric grid. In one example, the system 100 may be configured with a maintenance mode control group. In this case, the system 100 may be configured to command the respective electrical devices to shift to a state where energy consumption is minimized during repair and maintenance operations of the electrical devices. The system 100 may be configured to ensure that necessary operations are performed by the electrical devices, or the electrical device is turned off or put to a standby mode. This enables, for example, to optimize operation of electrical devices of offices or factories during maintenances performed in said facilities. Information about the maintenances can be received by the system 100 from the user or detected by the system 100.

The system 100 may make decisions and optimize device operation in real time, using collected data and grid conditions. The system may analyse the electric grid data, such as electricity price and supply/demand information. Based on the electric grid data, the system 100 can optimize the energy usage of monitored electrical devices and market participation (e.g., with dynamic load management) of the electrical devices. The electricity consumption of electrical devices can be adjusted based on balance state of the electric grid (market conditions) and usage profiles of the electrical devices. For example, if the demand of electricity is high, the system 100 can decide to postpone at least part of the energy consumption of electrical device to a time when the demand is lower. The system 100 can be configured to automatically control the operation of the electrical devices based on an analysis of electricity production, usage conditions and market demand. Predictive algorithms may analyse historical data and market scenarios to anticipate future loads and enable to optimize operation of the electrical devices before a demand change occurs in the electric grid.

The system 100 can follow the usage history and performance of the electrical devices. Differences from normal operation can be detected and analysed. The system 100 may identify irregularities or performance degradation from the energy consumption of the electrical device. Based on this, the system 100 may inform of maintenance needs before the device fails. Algorithms stored in the system 100 may enable determining the optimal maintenance schedule for the electrical device, based on its usage profile and detected irregularities. Predictive maintenance and detection of irregularities may improve equipment reliability and lifetime, possibly reducing unexpected malfunctions.

At operation 312, the system 100 may perform continuous optimization and risk management. The system 100 may be configured to assess the energy usage and operational states of the device and its functional limitations. For example, the system 100 can estimate how often the electrical device can be moved to from one control group to another control group without excessive wear and tear. If the electrical device has been used too often, its control may be restricted. The system 100 may check if the electrical device is approaching its maintenance interval and prevents the electrical device from being added to the grid balancing control group if maintenance is needed soon. The system 100 may be further configured to notify the user about a possible need for a maintenance in advance, when the system 100 detects anomalies or decreased performance based on the monitored energy consumption data of the electrical device. This risk management step may ensure that the lifetime and reliability of the electrical device is maintained. The system 100 may be configured to monitor the performance of the electrical devices and continuously optimise energy usage of the electrical devices through a real-time feedback loop. The system 100 can be configured to analyse how much energy balancing has been done and/or how much energy has been saved. This feedback is fed to be used in the previous analysis and/or decision operations of the system 100. AI and machine learning models can be configured to learn from past decisions and adjust priorities for the future. If the system 100 detects that a particular decision has produced unsuccessful savings or reactions, the system 100 can be configured to adjust the decision weights and optimise future decisions accordingly.

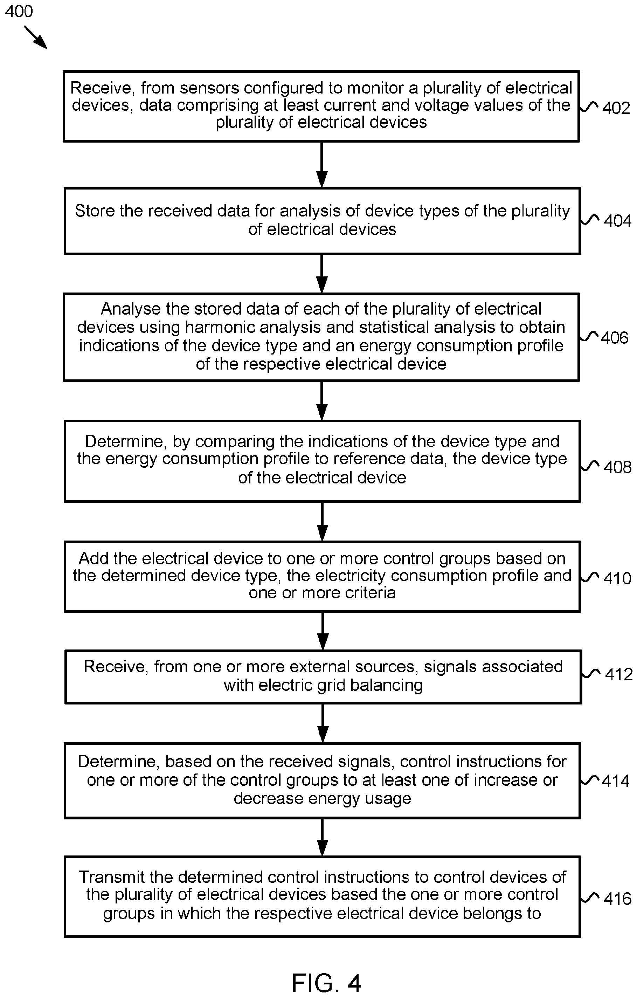

FIG. 4 illustrates an example of method for energy management. The method 400 may be performed, for example, by the system 100, or by a control device configured to cause the system 100 to perform the method 400, when installed therein.

At 402, the method may comprise receiving, from sensors configured to monitor a plurality of electrical devices, data comprising at least current and voltage values of the plurality of electrical devices.

At 404, the method may comprise storing the received data for analysis of device types of the plurality of electrical devices.

At 406, the method may comprise analysing the stored data of each of the plurality of electrical devices using harmonic analysis and statistical analysis to obtain indications of the device type and an energy consumption profile of the respective electrical device.

At 408, the method may comprise determining, by comparing the indications of the device type and the energy consumption profile to reference data, the device type of the electrical device.

At 410, the method may comprise adding the electrical device to one or more control groups based on the determined device type, the energy consumption profile and one or more criteria.

At 412, the method may comprise receiving, from one or more external sources, signals associated with electric grid balancing.

At 414, the method may comprise determining, based on the received signals, control instructions for one or more of the control groups to at least one of increase or decrease energy usage.

At 416, the method may comprise transmitting the determined control instructions to control devices of the plurality of electrical devices based the one or more control groups in which the respective electrical device belongs to. The control instructions may comprise, for example, instructions to at least one of turn on or turn off power supply to one or more electrical devices. For example, the control instructions may be received by a switch controlling the power feed to the respective electrical device(s). In one example, the control instructions may be transmitted directly to the electrical device (or a control device therein) or e.g. to a cloud server controlling operations of the electrical device remotely. For example, the control instructions may comprise instructions for a cloud-based control system of the electrical device (e.g., air source heat pump) to increase or decrease a target temperature maintained by the air source heat pump, and electricity consumption of the air source heat pump, respectively.

Further features of the methods directly result for example from functionality of system 100, or modules(s) 102, 104, 106, 108, 114 as described throughout the description, claims, and drawings, and are therefore not repeated here. An apparatus, for example a module, may be configured to perform or cause performance of any aspect of the method(s) described herein. Further, a computer program, a computer program product, or a (non-transitory) computer-readable medium may comprise instructions for causing, when executed by an apparatus, the apparatus to perform any aspect of the method(s) described herein. Further, an apparatus may comprise means for performing any aspect of the method(s) described herein. According to an example embodiment, the means comprises at least one processor; and at least one memory storing instructions that, when executed by the at least one processor, cause the apparatus at least to perform any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Although subjects may be referred to as 'first' or 'second' subjects, this does not necessarily indicate any order or importance of the subjects. Instead, such attributes may be used solely for the purpose of making a difference between subjects.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An energy management system, comprising:
at least one processor; and
at least one memory comprising instructions which, when executed by the at
least one processor, cause the energy management system at least to:
receive, from sensors configured to monitor a plurality of electrical devices, data comprising at least current and voltage values of the plurality of electrical devices;
store the received data for analysis of device types of the plurality of electrical devices;
analyse the stored data of each of the plurality of electrical devices using harmonic analysis and statistical analysis to obtain indications of the device type and an energy consumption profile of the respective electrical device;
determine, by comparing the indications of the device type and the energy consumption profile to reference data, the device type of the electrical device;
add the electrical device to one or more control groups based on the determined device type, the energy consumption profile and one or more criteria;
receive, from one or more external sources, signals associated with electric grid balancing;
determine, based on the received signals, control instructions for one or more of the control groups to at least one of increase or decrease energy usage; and
transmit the determined control instructions to control devices of the plurality of electrical devices based the one or more control groups in which the respective electrical device belongs to.

2. The energy management system of claim 1, wherein the energy
management system is caused to:
calculate, based on the received data, at least one of energy usage, harmonic distortion or usage times of the electrical device with respect to time;
obtain the indications of the device type based on the calculated data, wherein the indications comprise at least one of an indication of a continuous load type, an indication of a cyclic load type, harmonic characteristics, usage times or a ratio of harmonic components of the electrical device;
calculate probabilities of the device type based on the indications of the device type, the energy consumption profile and the reference data;
determine the device type based on the probability being above a certain threshold; and
at least one of repeat the analysis after a certain period when new data is received from the sensors or transmit the data to a cloud server device for further analysis performed using one or more machine learning models configured for identification of device types when it is determined that the calculated probabilities are below the certain threshold.

3. The energy management system of any preceding claim, wherein the control instructions cause the electrical devices included in the control group to apply one of a normal operation mode of the electrical device, to apply an energy saving operation mode, to increase energy usage based on available renewable energy, or to participate in the electric grid balancing by decreasing energy usage for a certain time period based on the instructions received from the energy management system.

4. The energy management system of any preceding claim, wherein at least one of the control groups is configured to provide reserve capacity for the electric grid and the signals associated with electric grid balancing comprise a signal indicative of a need to activate the reserve capacity for balancing the electric grid; and
wherein the control instructions transmitted to the at least one control group configured to provide reserve capacity comprise instructions to reduce energy consumption in response to the received signal indicative of the need to activate the reserve capacity.

5. The energy management system of any preceding claim, further caused
to:
verify, based on the data received after the transmitted control instructions, that the energy usage of the electrical devices has increased or decreased according to the transmitted control instructions; and
adjust at least one of the control groups or the control instructions based on results of the verification.

6. The energy management system of any preceding claim, wherein the energy management system is caused to determine, based on the data received from the electrical device, at least one of:
harmonic distortion of the electrical device;
a power factor and phase angle between the current and the voltage;
load impedance at different frequencies; and
determine the device type of the respective electrical device based on the power factor, the phase angle and the load impedance.

7. The energy management system of claim 6, caused to:
determine that the device type corresponds to resistive load when at least one of the power factor is approximately one, the phase angle between the current and the voltage is approximately zero, the amount of harmonic distortion is below a first threshold, or impedance is approximately constant;
determine that the device type corresponds to inductive load when at least one of the power factor is less than one, the phase angle between the current and the voltage is positive, the amount of harmonic distortion is above the first threshold, or the impedance increases with respect to frequency; and
determine that the device type corresponds to capacitive load when at least one of the power factor is less than zero, the phase angle between the current and the voltage is negative, the amount of harmonic distortion is above the first threshold, or the impedance decreases with respect to frequency.

8. The energy management system of any preceding claim, wherein the
energy management system is further configured to:
after the device type is determined, monitor the received data to detect changes in behaviour of the respective electrical device;
detect that the changes in behaviour of the electrical device are indicative of at least one of a malfunction of the electrical device or changed device type; and
remove the electrical device from the one or more control groups based on the detected malfunction or change the control group of the electrical device based on the detected change of a device type.

9. The energy management system of any preceding claim, wherein the one or more criteria comprise at least one of:
- a current operation mode of the electrical device;
- priority set by a user for balancing the electric grid, reducing energy usage of a property of the user or increasing usage of renewable energy sources;
- the signal associated with electric grid balancing being below one or more set thresholds;
- the signal associated with electric grid balancing being above the one or more set thresholds;
- predictions about the electric grid balance indicating a need to increase or decrease energy usage;
- criticality of operation of the electrical device;
- data received from sensors indicative of a presence of user in the property;
- operating environment of the electrical device;
- operational limitations of the device type;
- response time of the device type to load changes;
- capacity of the electrical device for energy consumption adjustments; or
- a share of renewable energy available for use by the electrical devices.

10. The energy management system of claim 9, caused to:
determine weighting factors for the one or more criteria with respect to each of the control groups;
calculate points for each control group based on the determined weighting factors; and
determine the control instructions based on the control group having the highest points.

11. The energy management system of any preceding claim, wherein the control group of the electrical device is changed dynamically based on updated information associated with the one or more criteria or the signals associated with the electric grid balancing.

12. The energy management system of any preceding claim, wherein the
energy management system comprises:
one or more edge processing devices configured to perform the data monitoring, data analysis using the harmonic analysis and statistical analysis and transmission of control instructions; and
a cloud server device communicatively coupled with the one or more edge processing devices and configured to provide for the one or more edge processing devices at least one of predictions of electric grid balance, a communication link for the signals associated with electric grid balancing, or device type analysis using one or more machine learning models.

13. The energy management system of claim 12, wherein the data monitoring, data analysis using the harmonic analysis and statistical analysis, and control operations are performed by different edge processing devices, the different edge processing devices being communicatively coupled with each other and forming a modular structure.

14. The energy management system of claim 12 or 13, further caused to:
determine that the device type cannot be determined by the edge processing device based on the received data using the harmonic analysis and statistical analysis; and
at least one of perform, by the edge processing device, the device type analysis again after a predetermined interval based on new data received for the respective electrical device or transmit the data to the cloud server device to be analyzed using the one or more machine learning models.

15. A method for energy management, comprising:
receiving, from sensors configured to monitor a plurality of electrical devices, data comprising at least current and voltage values of the plurality of electrical devices;
storing the received data for analysis of device types of the plurality of electrical devices;
analysing the stored data of each of the plurality of electrical devices using harmonic analysis and statistical analysis to obtain indications of the device type and an energy consumption profile of the respective electrical device;
determining, by comparing the indications of the device type and the energy consumption profile to reference data, the device type of the electrical device;
adding the electrical device to one or more control groups based on the determined device type, the energy consumption profile and one or more criteria;
receiving, from one or more external sources, signals associated with electric grid balancing;
determining, based on the received signals, control instructions for one or more of the control groups to at least one of increase or decrease energy usage; and
transmitting the determined control instructions to control devices of the plurality of electrical devices based the one or more control groups in which the respective electrical device belongs to.
